Europäisches Patentamt

European Patent Office

Office européen des brevets

(11) Veröffentlichungsnummer: **0 170 690**
**B1**

## EUROPÄISCHE PATENTSCHRIFT

(45) Veröffentlichungstag der Patentschrift: **13.06.90**

(51) Int. Cl.⁵: **G 01 N 27/72**

(21) Anmeldenummer: **85901003.5**

(22) Anmeldetag: **07.02.85**

(86) Internationale Anmeldenummer:
**PCT/EP85/00043**

(87) Internationale Veröffentlichungsnummer:
**WO 85/03577 15.08.85 Gazette 85/18**

(54) **ZERSTÖRUNGSFREIE WERKSTOFFPRÜFUNG VON FERROMAGNETIKA.**

(30) Priorität: **07.02.84 DE 3404232**

(43) Veröffentlichungstag der Anmeldung:
**12.02.86 Patentblatt 86/07**

(45) Bekanntmachung des Hinweises auf die
Patenterteilung:
**13.06.90 Patentblatt 90/24**

(84) Benannte Vertragsstaaten:
**AT BE CH DE FR GB LI LU NL SE**

(56) Entgegenhaltungen:
**EP-A-0 100 009**
**WO-A-83/01836**
**DE-A-2 837 733**
**US-A-3 555 887**

(73) Patentinhaber: **STENGEL, Wolfgang**
**Sailerstrasse 8**
**D-8000 München 40 (DE)**

(72) Erfinder: **STENGEL, Wolfgang**
**Sailerstrasse 8**
**D-8000 München 40 (DE)**

(74) Vertreter: **Eisenführ, Speiser & Strasse et al**
**Zweibrückenstrasse 17**
**D-8000 München 2 (DE)**

**Die Akte enthält technische Angaben, die nach
dem Eingang der Anmeldung eingereicht
wurden und die nicht in dieser Patentschrift
enthalten sind.**

Courier Press, Leamington Spa, England.

**Beschreibung**

Die Erfindung betrifft ein Verfahren zur Untersuchung von Materialeigenschaften und Materialzuständen von Ferromagnetika aufgrund magneto-mechanischer Emission des Ferromagnetikums in einem Magnetwechselfeld und eine Vorrichtung zur Durchführung des Verfahrens.

Zerstörungsfreie Werkstoffprüfungen haben sich in der verangenen Zeit ein immer größer werdendes Feld der Werkstoffprüfung aufgrund des offensichtlichen Vorteiles erobert, daß hierbei die zu prüfenden Materialen unversehrt bleiben. Die bekannten Prüfverfahren beruhen auf unterschiedlichen physikalischen Effekten und weisen demzufolge jeweils spezifische Vorteile, aber auch Beschränkungen auf. Von da her besteht ein immer während er Bedarf der Technik an neuen Verfahren, sei es, um die bekannten Verfahren zu ergänzen, oder um aufgrund spezifischer Vorteile neue Möglichkeiten zur Prüfung der verschiedenartigsten Parameter zu erhalten.

In den letzten wenigen Jahren sind Prüfverfahren entwickelt worden, die grundsätzlich auf dem Effekt der Magnetostriktion beruhen, d.h. der Deformation eines Ferromagnetikums durch ein angelegtes äußeres Magnetfeld. Dieser Effekt ist seit dem vergangenen Jahrhundert bekannt. Bei normalen Magnetstärken liegen die erzielbaren Längenänderungen infolge des Magnetfeldes, $\Delta 1/1$, bei etwa $10^{-5}$.

In NDT International, October 1981, S. 227 bis 234, "Magnetomechanical acoustic emission—a new method for non-destructive stress measurement", Shibata und Ono, ist ein auf magneto-mechanischer akustischer Emission beruhendes Werkstoffprüfverfahren beschrieben. Hierbei wird ein Ferromagnetikum zur Emission akustischer Signale angeregt, wenn es in das Magnetfeld einer mit Netzwechselstrom konstanter Frequenz von 60 Hz gespeisten Spule gebracht wird. Die magnetomechanischen akustischen Emissionssignale (MAE-Signale) sind abhängig von den Materialeigenschaften und dem Materialzustand, beispielsweise einer Vorbehandlung wie Glühen des Materials oder Spannungen aufgrund äußerer Kräfte. Der Effekt wird gedeutet als eine Verschiebung der Grenzen magnetischer Bereiche im Ferromagnetikum.

Aus "Schweißen und Schneiden", Jahrgang 32 (1980), Heft 11, S. 449 bis 452 ist ein zerstörungsfreies magnetisches Verfahren zum Ermitteln von Eigenspannungen ferromagnetischer Werkstoffe beschrieben, bei dem das aufgrund des Umklappens der Weißschen Bereiche entstehende "Barkhausenrauschen", genauer gesagt der Mittelwert der Rauschamplitude im steilsten Bereich der Hysteresekurve, als Maß für die Werkstoffspannung gemessen wird. Hierbei können jedoch nur Effekte festgestellt werden, die sich bei den in der Druckschrift angegebenen Frequenzen im Bereich zwischen 500 und 10 000 Hz an der Oberfläche oder höchstens in einem Bereich von 0,2 bis 0,3 mm unterhalb der Oberfläche abspielen.

Aus der nach dem Prioritätstag der vorliegenden Anmeldung veröffentlichten EP—A1—0 100 009 ist bereits eine Vorrichtung zum Messen von Werkstoffeigenschaften bekannt, welche folgende Merkmale aufweist:

Eine von einem Wechselstromgenerator durch stimmbare Frequenz beaufschlagte Spule;
einen über ein Koppelmedium an den Probenkörper angekoppelten induktiven Wandler;
und eine Registriervorrichtung.

Weiterhin ist aus der WO 83/01 836 bereits ein Verfahren zur Messung der Materialermüdung ferromagnetischer Materialien bekannt, bei dem eine zerstörungsfreie Materialprüfung mittels des Barkhausen-Effekts durchgeführt wird.

Die DE—A1—2 837 733 zeigt ein Verfahren zur zerstörungsfreien Festellung von Werkstoffzuständen unter Ausnutzung des in einer Probe durch Erzeugen eines quasi-stationären Wechselfeldes bewirkten magnetischen Barkhausensignales. Die Erzeugung des Wechselfeldes erfolgt mit einem bipolaren Netzgerät, mit dem die Erregerfrequenz und die Erregerfeldstärke des quasi-stationären Wechselfeldes fest einstellbar veränderlich ist. Zur Charakterisierung der Materialzustände werden der in der Probe verursachte Magnetische Barkhausen-Effekt mit einem induktiven Aufnehmer und die dabei auch induzierten Ultraschallsignale (akustischer Barkhausen-Effekt) mit einem akustischen Aufnehmer gemessen. Durch eine Änderung der Frequenz des quasi-stationären Wechselfeldes und/oder des Betrages der Erregerfeldstärke kann die Eindringtiefe, bsi zu der akustische Signale emittiert werden, verändert werden.

Weiterhin beschreibt die US—A—3 555 887 eine elektroakustische Prüfvorrichtung zur Messung der Wandstärke und von Anomalien im Material. Dabei wird ebenfalls eine elektromagnetische Meßvorrichtung verwendet, bei der ein magnetisches Gleichfeld mit einem hochfrequenten Magnetfeld überlagert wird.

Der Erfindung liegt daher die Aufgabe zugründe, ein neues Verfahren und eine neue Vorrichtung bereitzustellen, durch welches sowohl Eigenschaften des gesamten Materialkörpers als auch Oberflächenzustände festgestellt werden können und das darüber hinaus die Beschränkungen der bekannten Verfahren nicht mehr aufweist.

Die Erfindung steht unter der Erkenntnis, daß bei höheren Frequenzen eines ein Ferromagnetikum anregenden Magnetfeldes die bis dahin lineare Abhängigkeit der Magneto-mechanischen akustischen Emission von der Frequenz aufhört und ein komplexes Signal entsteht, dessen Moden eine Deutung des Materials oder seines Zustandes ermöglichen. Das entstandene Signal weist Resonanzen mit einer Modenstruktur auf und soll nachfolgend als magneto-elastisch induzierte Emission (MEIE) bezeichnet werden.

Eine abschließende Deutung der dem Effekt zugrundeliegenden naturwissenschaftlichen Grundlagen steht noch aus. Zum jetzigen Zeitpunkt wird angenommen, daß durch das plötzliche Umkehren des Magnetfeldes im Ferromagnetikum magnetostriktive elastische Eigenmoden angeregt werden, ähnlich wie eine Stimmgabel durch Anstoßen zu Eigenschwingungen angeregt wird. Die so erzeugten Eigenschwingungen sind gedämpft. Durch wiederholtes plötzliches Unpolen des Magnetfeldes kommt es durch Superposition der bei jedem Umpolen angeregten Eigenschwingungen bei bestimmten Frequenzen zu Resonanzen.

Im Umkehrung zur Magnetostriktion wirkt sich eine elastische verzerrung auf die Magnetisierbarkeit einer Probe, ausgedrückt durch die Suszeptibilität aus; die durch das Umpolen des Magnetfeldes erzeugten elastischen Schwingungen wirken auf die Magnetisierbarkeit des Ferromagnetikums beim erneuten Umpolen des Feldes. Infolge der Rückkopplung zwischen erregender Ursache, dem Magnetwechselfeld, und erregter Wirkung, den elastichen Schwingungen, treten Resonanzen auf.

Infolge von Relaxationseffekten ist die magnetische Suszeptibilität selbst frequenzabhängig, aus diesem Grunde treten materialabhängig Resonanzen auf.

Bei Frequenten unterhalb von 3 kHz ist das Signal in Abhängigkeit von der Frequenz bei den bisher untersuchen Materialien und Geometrien nahezu linear, ausgeprägte Resonanzen treten ab etwa 5kHz auf.

Die Aufgabe wird gelöst durch Registrierung des MEIE-Signales in Abhängigkeit von der Frequenz des Magnetwechselfeldes für a) eine standardisierte ferromagnetische Probe, b) das zu prüfende ferromagnetische Material, d) Vergleich von a) und b).

Vorteile des erfindungsgemäßen Verfahrens sind insbesondere die hohe Reproduzierbarkeit, eine kurze Meßzeit, ein geringer apparativer Aufwand und die Tatsache, daß die Proben nur standardisiert sein müssen, sonst aber keine Vorbereitung der Proben erforderlich ist. Die erforderlichen Magnetfelder sind von normaler Stärke.

Eine weitere wichtige Anwendung der MEIE-Signale liegt in dem alternativen erfindungsgemäßen Verfahren gemäß Anspruch 2, bei dem folgende Schritte ablaufen: d) Registrierung de Magneto-elastischen induzierten Emission (MEIE) in Abhängigkeit von der Frequenz des Magnetwechselfeldes bei einem bestimmten Probenkörper; e) Einwirkenlassen einer Einflußgröße auf diesen Probenkörper; f) Wiederholung des Schrittes d); g) Vergleich der registrierten MEIE von d) und f), und in der erfindungsgemäßen Vorrichtung nach Anspruch 12.

Auf besonders vorteilhafte Weise wird durch das erfindungsgemäße Verfahren eine neue Möglichkeit geschaffen, Spannungs/Dehnungs-Messungen, d.h. die Aufnahme des dem Techniker wohlbekannten Spannungs/Dehnungs-Diagrammes, bei Probenkörpern beliebiger Form zu bewerkstelligen.

Es ist beispielsweise bei Flugzeugtriebwerksteilen, anderen hochbelasteten Fahrzeug- oder Maschinenteilen, aber auch ausgedehnten Bauwerken wie Brücken möglich, durch Aufnahme der MEIE-Signale vor und nach Belastung (bzw. jedem Einsatz) festzustellen, ob etwa aufgetretene Einflußgrößen zu einer reversiblen oder aber einer irreversiblen Werkstoffbeanspruchung geführt haben. Im Spannungs/Dehnungs-Diagramm wäre das die Unterscheidung zwischen dem Elastischen Bereich bis zur technischen Dehngrenze, dem Gleichmaßdehnungsbereich und dem plastischen Bereich. Da bei der Entstehung der MEIE-Signale die Probenlänge (die ja einer Resonatorlänge der schwingenden Probe entspricht) eine Rolle spielt, ist beim Übergang zu bleibenden Werkstoffveränderungen (d.h. über den elastischen Bereich hinaus) infolge der Werkstofflängung eine besonders deutliche Änderung des MEIE-Signales festzustellen).

Wie weiter unten noch genauer ausgeführt wird, kann auf die beschriebene Weise auch der Einfluß einer Wasserstoffversprödung, die in der Technik von großer Bedeutung ist, und entsprechender Einflußgrößen untersucht werden.

Vorteilhafte Ausgestaltungen der Erfindungen sind in abhängigen Ansprüchen angegeben.

Bei einer vorteilhaften Ausgestaltung der Erfindung weist das Magnetwechselfeld einen Magnetgleichfeldanteil und einen Magnetwechselfeldanteil auf. Mit dem Magnetgleichfeld kann eine bestimmte Vormagnetisierung eingestellt oder auch der zu prüfende Körper entmagnetisiert werden, physikalisch kann ein bestimmter Punkt auf der Hysteresekurve des Materials festgelegt werden. Daher ist in einer weiteren vorteilhaften Ausgestaltung der Erfindung der Magnetgleichfeldanteil in seiner Magnetfeldstärke änderbar.

In einer weiteren vorteilhaften Ausgestaltung der Erfindung wird das Magnetwechselfeld mittels eines rechteckförmigen elektrischen Stromes erzeugt. Infolge der steilen Impulsform von Rechteckimpulsen sind aufgrund des Induktionsgesetzes die auftretenden magnetischen und damit auch die aus ihnen resultierenden magneto-mechanischen akustischen Effekte besonders stark. Daher werden besonders intensive MEIE-Signale erhalten.

In einer weiteren vorteilhaften Ausgestaltung der Erfindung wird das Magnetwechselfeld mittels eines sinusförmigen elektrischen Stromes erzeugt. Diese Art der Magnetfelderzeugung wird dann von Vorteil sein, wenn es auf besondere Reinheit, d.h. Freiheit von Oberwellen des anregenden Signales ankommt.

In einer weiteren vorteilhaften Ausgestaltung der Erfindung ist vorgesehen, daß die Registrierung der MEIE mittels stofflicher Kopplung der Oberfläche des Ferromagnetikums mit einem akustisch-elektrischen Wandler erfolgt. Geeignete Kopplungsmedien sind beispielsweise Silikonöl o.ä., wie aus der Ultraschalltechnik bekannt. Derartige Wandler sind einfach aufgebaut und kostengünstig erhältlich.

Sollte möglicherweise das jedem mechanisch-elektrischen Ultraschallwandler eigene Frequenzverhalten sich störend auswirken können, wird gemäß einer weiteren vorteilhaften Ausführungsform der Erfindung empfohlen, daß die Registrierung der magneto-elastischen induzierten Emission mittels berührungsloser Abtastung der Oberfläche des Ferromagnetikums erfolgt. Hierfür sind insbesondere optische Verfahren geeignet, beispielsweise interferometrische oder Laser-interferometrische Methoden, die bis zu sehr hohen Frequenzen linear arbeiten.

Be einer weiteren vorteilhaften ausgestaltung der Erfindung wird vorgeschlagen, die Registrierung in einem Frequenzbereich zwischen 5 kHz und 350 kHz vorzunehmen.

Das erdmagnetische Feld ist zwar schwach, es sind jedoch insbesondere bei hochauflösender Registrierung Fälle denkbar, bei denen dieses schwache Feld störende Auswirkungen haben könnte. Gemäß einer weiteren vorteilhaften Ausgestaltung der Erfindung wird daher das Erdmagnetfeld abgeschirmt, beispielsweise mittels helmholtzspulen.

Mit der Erfindung ist es möglich, Materialien zu identifizieren und zu untersuchen, beispielsweise auf ihre Legierungszusammensetzung und ihre Reinheit, aber auch auf Fehlstellen wie Risse, Poren und Lunker.

Weiterhin ist mit dem Verfahren gemäß der Erfindung eine Ermittlung des Zustandes des Materials möglich. Es können Eigenspannungen bestimmt werden aber auch die "Vorgeschichte" des Materials wie Wasserstoffaufnahme, Hydrieren, Nitrieren, Anlassen.

Das erfindungsgemäße Verfahren ist weiterhin zur Bestimmung magnetischer Kenngrößen geeignet, es kann aber auch über entsprechende Eichungen zur Temperaturbestimmung des Werkstoffes eingesetzt werden.

Eine Vorrichtung zur Durchführung des Verfahrens sowie Diagramme der hiermit nach dem erfindungsgemäßen Verfahren ermittelten Meßgrößen sind in den Figuren weidergegeben. Nachstehend wird die Erfindung anhand der Figuren näher erläutert, woraus weitere Vorteile und Merkmale hervorgehen.

Es zeigen:

Fig. 1 vier Diagramme für Stahl mit unterschiedlicher Vorbehandlung;

Fig. 2 Diagramme zweier unterschiedlicher Materialien, Stahl und Weicheisen;

Fig. 3 eine Vorrichtung zur Durchführung des erfindungsgemäßen Verfahrens;

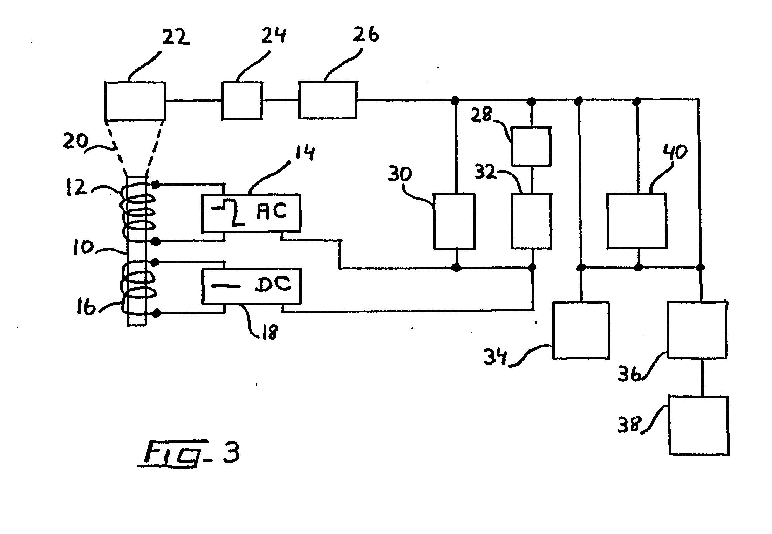

Die in Fig. 3 dargestellte Vorrichtung zur Durchführung des Verfahrens gemäß der Erfindung zeigt einen Probenkörper 10 aus ferromagnetischem Material, dessen Eigenschaften untersucht werden sollen. Um vergleichbare Ergebnisse zu erzielen, weist der Probenkörper 10 vorzugsweise standardisierte Abmessungen auf und ist standardisierten Bedingungen insoweit unterworfen, wie diese das zu messende Signal stören könnten, z.B. einer Konstanten, auf einen bestimmten Wert festgelegten Temperatur, falls nicht gerade die Temperatur bestimmt werden soll.

Eine derartige Standardisierung ist insbesondere für Serienuntersuchungen empfehlenwert, es ist jedoch auch durch einmalige Registrierung der Einflußgrößen wie Temperatur, Abmessungen der Probe 10 usw. deren Einfluß zu Berücksichtigen.

Die Probe 10 ist im Magnetfeld einer Spule 12 angeordnet die von einern AC-Generator 14 mit einem Wechselstromsignal beaufschlagt wird und derart ein Magnetwechselfeld erzeugt. Durch eine zweite Spule 16, die mittels eines DC-Generators mit einem Gleichstrom versorgt wird, wird ein Magnetgleichfeld erzeugt, das sich am Ort des Probenkörpers 10 dem Magnetwechselfeld überlagert. Selbstverständlich sind außer der in Fig. 3 dargestellten Anordnung der Spulen 12, 16 und der Probe 10 weitere Ausgestaltungen möglich; so können beispielsweise beide Spulen 12, 16 übereinander gewickelt angeordnet sein.

Die Frequenz des AC-Generators (14) wird vorzugsweise in einem einstellbaren Frequenzbereich zwischen einer unteren Frequenz $f_u$ und einer oberen Frequenz $f_0$ kontinuierlich verändert. Die Frequenzänderung kann dabei beispielsweise linear oder logarithmisch erfolgen. Für $f_u$ und $f_0$ haben sich bei den untersuchten Materialien Frequenzen von 5 kHz bzw. 250 kHz als besonders vorteilhaft erwiesen, um aussagekräftige Signale zu erzeugen.

Die infolge der von den Spulen erzeugten Magnetfelder resultierenden MEIE-Signale des Probenkörpers 10 werden über ein Koppelmedium 20, beispielsweise Silikonöl, auf einen mechanisch-elektrischen Wandler 22 gegeben. Hierfür steht nach dem Stand der Technik eine vielzahl von Wandlern zur Verfügung. Da mechanisch (akustisch oder Ultraschall)-elektrische Wandler ein eigenes Frequenzverhalten aufweisen ist dieses entsprechend zu berücksichtigen oder der Wandler demgemäß auszuwählen.

Statt ein Koppelmedium 20 und einen mechanisch-akustischen Wandler 22 vorzusehen, ist es auch möglich, die MEIE-Signale des Probenkörpers 10 auf andere Weise abzunehmen, z.B. berührungslos mit optischen Verfahren. In diesem Fall wäre das Koppelmedium 20 nicht erforderlich, und der Wandler 22 wäre eine geeignete, besipielsweise Laser-interferometrische Vorrichtung.

Das aus dem akustischen Eingangssignal des Wandlers 22 in ein elektrisches Ausgangssignal umgewandelte Signal wird auf einen Impedanzwandler 24 und nachfolgend auf einen Verstärker 26 gegeben. Von dort aus gelangt das verstärkte Signal zunächst ein RMS-Voltmeter 28, mit dem die Signalhöhe festgestellt werden kann, und darauf auf jeweils einen Eingangsanschluß eines Zweikanal-Oszillographischen 30 und eines x—y-Schreibers 32, deren jeweils anderer Eingang von einem frequenzproportionalen Signal des AC-Generators beaufschlagt wird. Somit steht sowohl an dem Oszillographen 30 als auch dem x—y-Schreiber ein Signal zur Verfügung, das in einem festlegbaren Verhältnis zur Frequenz des AC-Generators 14 steht. Dieses Signal wird dazu verwendet, die Zeitbasis des Oszillographen 30 bzw. die x-Auslenkung des x—y-Schreibers 32 zu steuern, so daß derart eine Registrierung des verstärkten voranstehend beschriebenen Signals als Funktion der Frequenz des die AC-Spule 12 beaufschlagenden Stromes ermöglicht wird.

Als weitere Registriergeräte können, wie dargestellt, ein Frequenzanalysator 34, ein Transientenrecorder 36 und ein elektronisches Danteverarbeitungsgerät, welches schematisch mit 38 bezeichnet ist, vorgesehen werden oder ein pauschal mit 40 bezeichnetes Speichermedium, beispielsweise ein schneller elektronischer Speicher, Hierbei sind möglicherweise erforderliche Geräte zur Anpassung des verstärkten Signals an die Geräte 34, 36, 38 und 40 dem Fachmann wohlbekannt und aus Gründen der Übersichtlichkeit nicht in Fig. 3 dargestellt.

Es ist auch möglich und bei komplexen Signalen vorteilhaft, diese zunächst nur in dem Speichermedium 40 abzulegen und zu beliebig wählbarer späterer Zeit beispielsweise in dem Computer 38, der auch ein Mini- oder Mikroprozessor sein kann, zu verarbeiten. Hierbei können insbesondere bestimmte interessierende Anteile des verstärkten Signals einer eingehenden, auch wiederholten Analyse unterzogen werden.

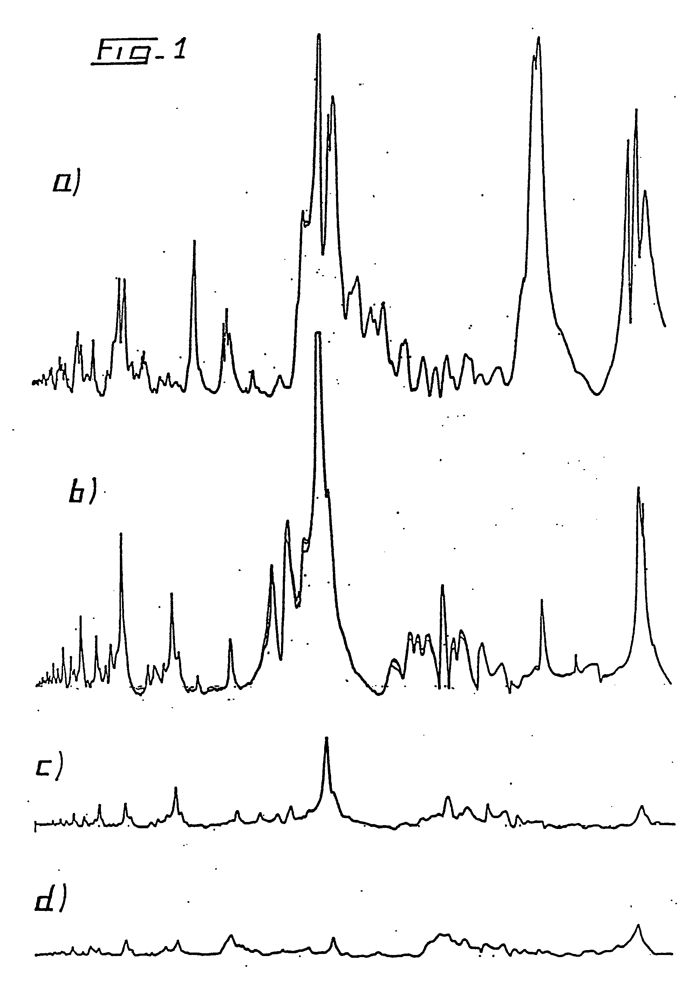

Ein Beispiel für mit der erfindungsgemäßen Vorrichtung nach Fig. 3 registrierte verstärkte Signale ist in Fig. 1 schematisch dargestellt. Die Signale wurden über das RMS-Voltmeter 28 auf dem x—y-Schreiber 32 aufgezeichnet.

In Fig. 1 sind auf der Abszisse jeweils ein Frequenzbereich von 5 kHz bis 250 kHz linear und auf der Ordinate die MEIE-Signale wiedergegeben.

Als Probenkörper 10 dienten zylindrische Rundproben nach DIN 50125 aus Stahl der Bezeichnung 42 CrMo4, die einer unterschiedlichen Vorbehandlung—vor Aufnahme des MEIE-Signals—unterworfen wurden, und zwar in

Fig. 1a: vergütet
Fig. 1b: weichgeglüht
Fig. 1c: grobkorngeglüht
Fig. 1d: normalisiert.

Aus den Fig. 1a bis 1d wird zunächst deutlich, daß das registrierte Signal eine komplexe Anordnung von bei unterschiedlichen Frequenzen liegenden MEIE-Signalamplituden ('Peaks') aufweist. Wie diese Figuren weiter zeigen, bleibt die *Lage* der Peaks konstant, während sich ihre Amplitude in Abhängigkeit von der voranstehend geschilderten Vorbehandlung ändert.

Die in den Fig. 1a bis 1d dargestellten Signale wurden, um das Prinzip des Verfahrens zu verdeutlichen, mit einem x—y-Schreiber registriert, an dessen x-Eingang das frequenzproportionale, von dem AC-Generator 14 abgeleitete Signal anlag, während das verstärkte MEIE-Signal auf den y-Eingang gegeben wurde. Selbstverständlich ist eine eingehende Untersuchung der Peaks möglich, beispielsweise durch Integration, digitale Impulszähltechnik usw., jedoch nicht so illustrativ für eine Erklärung in diesem allgemeinen Rahmen.

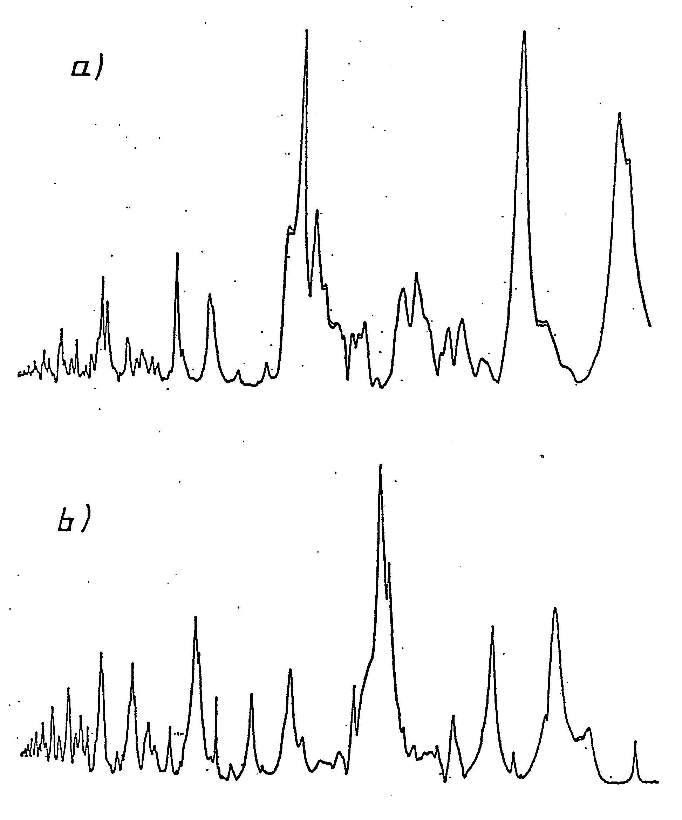

In Fig. 2 ist schematisch dargestellt, wie sich das MEIE-Signal ändert, wenn statt der in Fig. 2a benutzten Probe aus 42CrMo4-Stahl eine Probe 10 aus Weicheisen (Fig. 2b) untersucht wird. Hierbei zeigt sich, daß für jedes Ferromagnetikum ein charakteristisches MEIE-Spektrum besteht. Selbstverständlich ergeben sich, wenn die in Fig. 2b gezeigte Weicheisen-Probe unterschiedlichen Vorbehandlungen unterworfen wird, ein den Fig. 1a bis 1d ähnliches Verhalten, nur natürlich auf der Grundlage des charakteristischen Spektrums von Fig. 2b.

In einer getrennten Untersuchung wurden mit üblichen Methoden Werkstoffparameter der vier in Fig. 1 dargestellten Stahlproben festgestellt, die in der Tabelle aufgeführt sind.

Hierbei wird deutlich, daß das erfindungsgemäße Verfahren empfindlich auf sonst nur in zeit- und kostenaufwendiger Weise feststellbare Werkstoffparameter reagiert.

In einem weiteren Versuch wurde eine Probe aus Weicheisen eine Stunde galvanisch mit Wasserstoff beladen, indem aus $1\text{-}nH_2SO_4$ und seleniger Säure ein Bad bereitet wurde. Die Probe wurde in das Bad gelegt, in dem Bad wurde eine Stromdichte von 20 mA/cm$^2$ erzeugt, nach einer Stunde wurde der Probenkörper wieder herausgenommen.

Vor und nach der Behandlung wurde das MEIE-Spektrum nach dem Verfahren gemäß der Erfindung registriert. Es zeigte sich, daß wiederum die für Weicheisen charakteristische Peak-Lage nahezu unverändert blieb. Die höhe der Peaks nahm jedoch ab, und zwar auf etwa 10%. Selbst nach 15 Stunden hatte die Peakhöhe bei erneuter Registrierung nur etwa 50% der Peak-Höhe erreicht, die bei der unbehandelten Probe registriert wurde. Daher konnte geschlossen werden, daß auch nach einer so langen Zeit noch Gefahr der Wasserstoffversprödung besteht.

Damit kann erstmals die für die Praxis so wichtige Unterscheidung von reversibler zu irreversibler Waserstoffversprödung in situ getroffen werden. Bei irreversibler Versprödung ist der Werkstoff bleibend geschädigt, während bei reversibler Versprödung der ursprüngliche Zustand wieder (nach einer gewissen Zeit) erreicht wird.

# EP 0 170 690 B1

## TABELLE

| Probe | Elastizitäts-modul Nmm$^{-2}$ | $R_{p0,2}$* Nmm$^{-2}$ | $R_m$** Nmm$^{-2}$ | Gleichmaß-dehnung % | Plastische Dehnung % | Gesamt-dehnung % | Bruch-spannung Nmm$^{-2}$ |
|---|---|---|---|---|---|---|---|
| a | $2,093 \cdot 10^5$ | 1223,0 | 1294,0 | 4,675 | 11,96 | 12,36 | 852,5 |
| b | $2,119 \cdot 10^5$ | 621,7 | 736,8 | 11,42 | 22,85 | 23,07 | 460,6 |
| c | $2,296 \cdot 10^5$ | 678,4 | 963,1 | 6,938 | 13,40 | 13,72 | 747,0 |
| d | $2,152 \cdot 10^5$ | 748,0 | 1191,0 | 6,348 | 11,21 | 11,66 | 938,8 |

*: $R_{p0,2}$: 0,2% Dehngrenzen-Spannung
**: $R_m$: Zugfestigkeit

Probenmaterial: Stahl 42CrMo4
Vorbehandlung: (a) vergütet, (b) weichgeglüht, (c) grobkorngeglüht, (d) normalisiert

## Patentansprüche

1. Verfahren zur Untersuchung von Materialeigenschaften und Materialzuständen von Ferromagnetika aufgrund magneto-mechanischer akustischer Emission des Ferromagnetikums in einem Magnetwechselfeld, gekennzeichnet durch Registrierung der magneto-elastischen induzierten Emission (MEIE) in Abhängigkeit von der Frequenz des Magnetwechselfeldes für
   a) eine standardisierte ferromagnetische Probe
   b) das zu prüfende ferromagnetische Material
   c) Vergleich von a) und b)
2. Verfahren zur Untersuchung von Materialeigenschaften und Materialzuständen von Ferromagnetika aufgrund von magneto-mechanischer akustischer Emission des Ferromagnetikums in einem Magnetwechselfeld, gekennzeichnet durch
   d) Registrierung der magneto-elastischen induzierten Emission (MEIE) in Abhängigkeit von der Frequenz des Magnetwechselfeldes bei einem bestimmten Probenkörper;
   e) Einwirkenlassen einer Einflußgröße auf diesen Probenkörper;
   f) Wiederholung des Schnittes d);
   g) Vergleich der registrierten MEIE von d) und f).
3. Verfahren nach Anspruch 1 oder 2, dadurch gekennzeichnet, daß das Magnetwechselfeld einen Magnetgleichfeldanteil und einen Magnetwechselfeldanteil aufweist.
4. Verfahren nach Anspruch 3, dadurch gekennzeichnet, daß der Magnetgleichfeldanteil in seiner Magnetfeldstärke änderbar ist.
5. Verfahren nach einem der voranstehenden Ansprüche, dadurch gekennzeichnet, daß das Magnetwechselfeld mittels eines rechteckförmigen elektrischen Stromes erzeugt wird.
6. Verfahren nach einem der voranstehenden Ansprüche, dadurch gekennzeichnet, daß das Magnetwechselfeld mittels eines sinusförmigen elektrischen Stroms erzeugt wird.
7. Verfahren nach einem oder mehreren der voranstehenden Ansprüche, dadurch gekennzeichnet, daß die Registrierung der magneto-elastischen induzierten Emission mittels berührungsloser Abtastung der Oberfläche des Ferromagnetikums erfolgt.
8. Verfahren nach einem oder mehreren der voranstehenden Ansprüche, dadurch gekennzeichnet, daß die Registrierung der magneto-elastischen induzierten Emission mittels eines Kopplungsmediums und eines akustisch-elektrischen Wandlers erfolgt.
9. Verfahren nach einem oder mehreren der voranstehenden Ansprüche, dadurch gekennzeichnet, daß die magneto-elastische induzierte Emission bei Frequenzen zwischen 5 kHz und 350 kHz registriert wird.
10. Verfahren nach einem oder mehreren der voranstehenden Ansprüche, dadurch gekennzeichnet, daß das Erdmagnetfeld abgeschirmt wird.
11. Verfahren nach einem oder mehreren der voranstehenden Ansprüche, dadurch gekennzeichnet, daß der Probenkörper (10) ein standardisierter Probenkörper (DIN 50125) ist.
12. Vorrichtung zur Durchführung des Verfahrens nach einem oder mehreren der Ansprüche 1 bis 11 mit einer Spule (12) zur Ankoppelung eines magnetischen Wechselfeldes und einem akustisch-elektrischen Wandler (22) und einer Registriervorrichtung (32, 34, 36, 38, 40) zur Registrierung der aufgenommen Ultraschallsignale, dadurch gekennzeichnet, daß die Spule (12) mit einer von einem Wechselstromgenerator (14) erzeugten durchstimmbaren Frequenz zur Erzeugung des magnetischen Wechselfeldes beaufschlagbar ist.
13. Vorrichtung nach Anspruch 13, dadurch gekennzeichnet, daß die Spule (12) ein Magnetisierungsjoch umgreift, mit dem der Probenkörper magnetisiert wird.

14. Vorrichtung nach einem der Ansprüche 12 oder 13, dadurch gekennzeichnet, daß zur Aufnahme des MEIE-Spektrums schnelle Darstellungs- (30) und Registriergeräte (34, 36, 40) und/oder ein elektronisches Datenverarbeitungsgerät (38) vorgesehen sind.

**Revendications**

1. Procédé d'investigation de propriétés de matériaux et d'états de matériaux de substances ferromagnétiques en fonction d'une émission acoustique magnétomécanique de la substance ferromagnétique dans un champ magnétique alternatif, caractérisé par
un enregistrement de l'émission magnéto-élastique induite (MEIE) en fonction de la fréquence du champ magnétique alternatif pour
a) un échantillon ferromagnétique standardisé
b) le matériau ferromagnétique à essayer
c) et la comparaison de a) et b).

2. Procédé d'investigation de propriétés de matériaux et d'états de matériaux de substances ferromagnétiques en fonction d'une émission acoustique magnétomécanique de la substance ferromagnétique dans un champ magnétique alternatif, caractérisé par
d) un enregistrement de l'émission magnéto-élastique induite (MEIE) en fonction de la fréquence du champ magnétique alternatif pour un corps d'échantillon défini;
e) une action d'une grandeur d'influence sur ce corps d'échantillon;
f) une répétition de la partie d);
g) la comparaison des MEIE enregistrées en d) et en f).

3. Procédé selon la revendication 1 ou 2, caractérisé en ce que
le champ magnétique alternatif présents une partie de champ magnétique continu et une partie de champ magnétique alternatif.

4. Procédé selon la revendication 3, caractérisé en ce que
le champ magnétique continu est variable dans son amplitude de champ magnétique.

5. Procédé selon l'une des revendications précédentes, caractérisé en ce que
le champ magnétique alternatif est réalisé à l'aide d'un courant électrique de forme rectangulaire.

6. Procédé selon l'une des revendications précédentes, caractérisé en ce que la champ magnétique alternatif est créé au moyen d'un courant électrique sinusoïdal.

7. Procédé selon l'une ou plusieurs des revendications précédentes, caractérisé en ce que l'enregistrement de l'émission magnéto-élastique induite est effectué au moyen d'une détection sans contact de la surface de la substance ferromagnétique.

8. Procédé selon l'une ou plusieurs des revendications précédentes, caractérisé en ce que l'enregistrement de l'emission magnéto-élastique induite est effectué au moyen d'un milieu de couplage et d'un transducteur acousto-électrique.

9. Procédé selon l'une ou plusieurs des revendications précédentes caractérisé en ce que l'émission magnéto-élastique induite est enregistrée dans un domaine de fréquence compris entre 5 kHz et 350 kHz.

10. Procédé selon l'une ou plusieurs des revendications précédentes caractérisé en ce que le champ magnétique terrestre est éliminé.

11. Procédé selon l'une ou plusieurs des revendications précédentes caractérisé en ce que le corps d'échantillon (10) est un corps d'échantillon standardisé (DIN 50125).

12. Dispositif pour la réalisation du procédé selon l'une ou plusieurs des revendications 1 à 11 comportant une bobine (12) pour le couplage d'un champ magnétique alternatif ainsi qu'un transducteur acousto-électrique (22) et un dispositif d'enregistrement (32, 34, 36, 38, 40) pour l'enregistrement des signaux ultrasoniques reçus, caractérisé en ce qu'une fréquence définissable, engendrée par un générateur de courant électrique (14), peut être appliquée à la bobine (12) pour créer le champ magnétique alternatif.

13. Dispostif selon la revendication 12, caractérisé en ce que la bobine (12) entoure une culasse d'aimantation grâce à laquelle est aimanté le corps d'échantillon.

14. Dispositif selon l'une des revendications 12 ou 13, caractérisé ce ce que des dispositifs rapides de représentation (30) et d'enregistrement (34, 36, 40) et/ou un dispositif électronique de traitement de données (38) sont installés en vue de la réception du spectre MEIE.

**Claims**

1. Method for the investigation of material properties and material conditions of ferromagnetic materials on the basis of magneto-mechanical acoustic emission of the ferromagnetic material in an alternating magnetic field, characterised by registration of the magneto-elastic induced emission (MEIE) as a function of the frequency of the alternating magnetic field for
a) a standardised ferromagnetic sample,
b) the ferromagnetic material to be tested,
c) comparison of a) and b).

2. Method for the investigation of material properties and material conditions of ferromagnetic materials on the basis of magneto-mechanical acoustic emission of the ferromagnetic material in an alternating magnetic field, characterised by

d) registration of the magneto-elastic induced emission (MEIE) as a function of the frequency of the alternating magnetic field for a particular sample body;

e) allowing an influencing variable to act on this sample body;

f) repetition of step d);

g) comparison of the registered MEIE of d) and f).

3. Method according to Claim 1 or 2, characterised in that the alternating magnetic field has a constant magnetic field portion and an alternating magnetic field portion.

4. Method according to Claim 3, characterised in that, the magnetic field strength of the constant magnetic field portion is variable.

5. Method according to one of the preceding claims, characterised in that, the alternating magnetic field is produced by means of a rectangular electric current.

6. Method according to one of the preceding claims, characterised in that, the alternating magnetic field is produced by means of a sinusoidal electric current.

7. Method according to one or more of the preceding claims, characterised in that, the registration of the magneto-elastic induced emission takes place by means of contactless sampling of the surface of the ferromagnetic material.

8. Method according to one or more of the preceding claims, characterised in that, the registration of the magnetic-elastic induced emission takes place by means of a coupling medium and an acoustic-electric transformer.

9. Method according to one or more of the preceding claims, characterised in that, the magneto-elastic induced emission is registered as a frequency between 5 kHz and 350 kHz.

10. Method according to one or more of the preceding claims, characterised in that the earth's magnetic field is screened off.

11. Method according to one or more of the preceding claims, characterised in that the sample body (10) is a standardised sample body (DIN 50125).

12. Apparatus for carrying out the method according to one or more of Claims 1 to 11 with a coil (12) for coupling an alternating magnetic field and an acoustic-electric transformer (22) and a registration apparatus (32, 34, 36, 38, 40) for registering the supersonic signal, characterised in that in order to produce the alternating magnetic field, the coil (12) is acted upon by a variable frequency produced by an alternating current generator.

13. Apparatus according to Claim 12, characterised in that the coil surrounds a magnetising yoke with which the sample body is magnetised.

14. Apparatus according to Claim 12 or 13, characterised in that for accepting the MEIE spectrum fast production (30) and registration instruments (34, 36, 40) and/or an electronic data-processing instrument (38) are provided.

EP 0 170 690 B1

Fig. 1

a)

b)

c)

d)

1

a)

b)

Fig. 3

EP 0 170 690 B1